# EUROPEAN PATENT SPECIFICATION

(11) **EP 3 935 908 B1**
(45) Date of publication and mention of the grant of the patent: **21.02.2024**
(21) Application number: 20715614.2
(22) Date of filing: 03.03.2020
(51) Int. Cl.: H04W 74/08

(54) **RANDOM ACCESS PROCEDURE IN UNLICENSED BANDWIDTH PART**
ZUFALLSZUGRIFFSVERFAHREN IN EINEM UNLIZENZIERTEN BANDBREITENTEIL
PROCÉDURE D'ACCÈS ALÉATOIRE DANS UNE PARTIE DE BANDE PASSANTE SANS LICENCE

(30) Priority: 05.03.2019 US 201962814140 P
(43) Date of publication of application: 12.01.2022
(73) Proprietor: Google LLC, Mountain View, CA 94043 (US)
(72) Inventor: WU, Chih-Hsiang, Mountain View, CA 94043 (US); YE, Shiangrung, Mountain View, CA 94043 (US)
(74) Representative: Cupitt, Philip Leslie
(86) International application number: PCT/US2020/020807
(87) International publication number: WO 2020/180873

(56) References cited:
- WO-A2-2018/164553
- NOKIA ET AL: "Increasing Tx opportunities for RA messages", 3GPP DRAFT; R2-1901259 INCREASING TX OPPORTUNITIES FOR RA MESSAGES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Athens, Greece; 20190225 - 20190301 14 February 2019 (2019-02-14), XP051602618, Retrieved from the Internet: URL:http://www.3gpp.org/ftp/tsg%5Fran/WG2% 5FRL2/TSGR2%5F105/Docs/R2%2D1901259%2Ezip [retrieved on 2019-02-14]
- HUAWEI ET AL: "LBT modeling for MAC", 3GPP DRAFT; R2-1901332 LBT MODELING FOR MAC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 15 February 2019 (2019-02-15), XP051602691, Retrieved from the Internet: URL:http://www.3gpp.org/ftp/tsg%5Fran/WG2% 5FRL2/TSGR2%5F105/Docs/R2%2D1901332%2Ezip [retrieved on 2019-02-15]
- "3rd Generation Partnership Project; Technical Specification Group Radio Access Network; Study on NR-based access to unlicensed spectrum (Release 16)", 3GPP STANDARD; TECHNICAL REPORT; 3GPP TR 38.889, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V16.0.0, 19 December 2018 (2018-12-19), pages 1-119, XP051591317, [retrieved on 2018-12-19] cited in the application

## Description

### FIELD OF THE DISCLOSURE

This disclosure relates to wireless communications and, more particularly, to synchronizing radio links between user devices and base stations in an unlicensed portion of the spectrum.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In some cases, base stations and user devices operating in wireless communication networks can utilize portions of the unlicensed radio spectrum. 5G New Radio (NR), for example, supports operations in the unlicensed spectrum, commonly referred to as NR-U.

NR systems also support beamforming. More particularly, a 5G NR base station (a next-generation Node B, or gNB) can transmit multiple downlink (DL) beams and identify each beam using a channel state information reference signal (CSI-RS) or a synchronization signal block (SSB), for example. A UE that attempts to synchronize the radio link between the UE and the base station using the random access procedure, for example, can detect a DL beam and select a random access (RA) preamble and a time-frequency resource for transmitting the RA preamble (referred to as a random access channel (RACH) occasion) based on the CSI-RS or SSB of the DL beam.

However, the random access procedure, or preparation for the random access procedure, can take a certain amount of time, during which the UE can move to a new location and no longer be able to detect the beam with the CSI-RS/SSB to which the selected RA preamble corresponds. As a result, the random access procedure can fail.

WO 2018/164553 A2 relates to a method of performing a random access procedure by a UE in a wireless communication system supporting an unlicensed band, the method including: performing an first channel access procedure for transmitting a RACH preamble in the unlicensed band during a first time unit; when the first channel access procedure succeeds, transmitting the RACH preamble based on a first configuration during the first time unit; and when the first channel access procedure fails, performing a second channel access procedure for transmitting the RACH preamble in the unlicensed band during a second time unit and transmitting the RACH preamble based on a second configuration during the second time unit depending on whether the second channel access procedure succeeds.

### SUMMARY

The invention is defined by the subject-matter of the independent claims. Particular embodiments of the invention are set out in the dependent claims.

A UE of this disclosure operates in a system that supports beamforming and performs a random access procedure to gain access to a channel allocated in the unlicensed spectrum, in a manner that increases the probability that the UE can successfully complete the random access procedure after repositioning within the cell. To this end, the UE detects a DL beam and selects an RA preamble and a RACH occasion based on the CSI-RS/SSB in the detected DL beam. The UE then performs a channel access (CA) procedure to determine whether the channel is idle. The CA procedure can be listen-before-talk (LBT), for example. If the UE has not transmitted the RA preamble by the time the channel access procedure completes, the UE selects a new RA preamble and a new PRACH occasion, which correspond to a different DL beam.

The CA procedure can take up a significant amount of time, e.g., the procedure can span a so-called "defer period" including a silent period followed by multiple timeslots of a fixed duration, and sometimes followed by an exponential backoff period.

In one example implementation, the UE completes the CA procedure and determines that the previously selected RACH occasion has passed. The UE then selects a new DL beam with a new CSI-RS/SSB and, using the new CSI-RS/SSB, selects a new RA preamble and a new PRACH occasion. The UE then performs a new CA procedure..

In example implementations, the UE completes the CA procedure prior to the first RACH occasion. The UE then checks whether the channel remains idle during a certain time interval that includes the RACH occasion. When the channel is no longer idle, the UE selects a new RA preamble and a new occasion. Further, the UE in one such implementation performs a new CA procedure prior to the second RACH occasion.

### BRIEF DESCRIPTION OF THE DRAWINGS

Fig. 1 is a block diagram of an example wireless communication network in which a user device can perform a random access procedure in the unlicensed spectrum in accordance with the techniques of this disclosure;
Fig. 2 is a messaging diagram of an example scenario in which a UE performs a channel access procedure prior to a random access procedure, in accordance with one of the techniques of this disclosure;
Fig. 3 is a timing diagram illustrating an example timing of a channel access procedure relative to an occasion to transmit a random access preamble;
Fig. 4 is a messaging diagram of an example scenario a UE completes a channel access procedure after the occasion to transmit a random access preamble occurs, and in response selects a new random access preamble and a new occasion to transmit the new random access preamble;
Fig. 5 is a messaging diagram of an example scenario a UE completes a channel access procedure before the occasion to transmit a random access preamble occurs, and in response performs a new channel access procedure prior to the occasion;
Fig. 6 is a flow diagram of an example method for selecting and transmitting a random access preamble, which can be implemented in the system of Fig. 1;
Fig. 7 is a messaging diagram of an example scenario in which a UE performs a channel access procedure prior to the occasion for transmitting a random access preamble, subsequently determines that the channel is not idle during a time period that includes the occasion, and selects a new random access preamble and a new occasion;
Fig. 8 is a messaging diagram of an example scenario in which a UE performs a channel access procedure prior to the occasion for transmitting a random access preamble, subsequently determines that the channel is not idle during a time period that includes the occasion, and performs a new channel access procedure after selects a new random access preamble and a new occasion;
Fig. 9 is a flow diagram of an example method for selecting a random access preamble and an occasion for transmitting the random access preamble, which can be implemented in the system of Fig. 1;
Fig. 10 is a flow diagram of an example method for selecting a random access preamble and an occasion for transmitting the random access preamble in view of the idle intervals on the channel, which can be implemented in the system of Fig. 1; and
Fig. 11 is a flow diagram of an example method for performing a random access procedure, which can be implemented in the system of Fig. 1.

### DETAILED DESCRIPTION OF THE DRAWINGS

A moving user device, or "user equipment"(UE), of this disclosure synchronizes a radio link between the UE and a stationary base station in an unlicensed portion of the radio spectrum, using resources identified in downlink (DL) beams, or directional transmissions from the base station. To this end, the UE can perform a random access procedure which involves an exchange of several (e.g., two or four) messages. For example, the random access procedure can be a 2-step random access procedure that involves an exchange of two messages (i.e., msgA and msgB). In another example, the random access procedure is a 4-step random access procedure that involves an exchange of four messages (i.e. msg1, msg2 msg3 and msg4). Because the UE moves relative to the base station, the UE can detect different DL beams at different times. As discussed in more detail below, the UE performs a channel access (CA). procedure to transmit and in some cases selects new resources for synchronizing the radio link after being unable to transmit a message of the random access procedure or determining that the relevant channel is no longer idle.

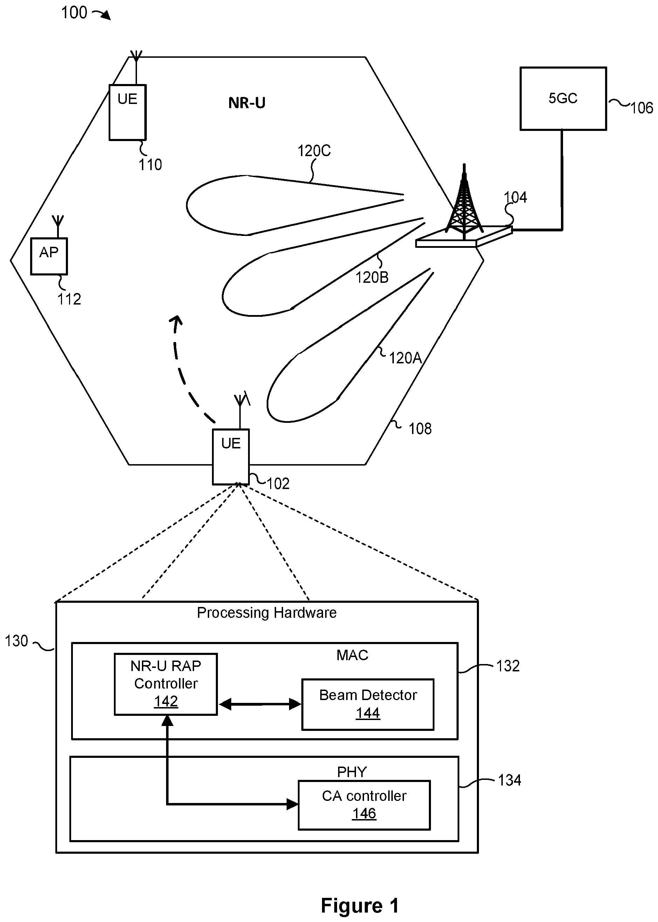

In particular, Fig. 1 depicts an example wireless communication network 100 in which devices such as base stations and user devices (also referred to user equipment, or UEs) communicate using unlicensed portions of the radio spectrum. Because the examples below refer primarily to 5G NR technologies, these unlicensed portions of the radio spectrum are referred to as NR-U.

The wireless communication network 100 in an example configuration includes a UE 102, which can be any suitable device capable of wireless communications (as further discussed below). The wireless communication network 100 further includes a 5G NR base station 104 connected to a core network (CN) 106 of CN type 5GC. The 5G NR base station 104 accordingly operates as a next-generation Node B (gNB). In other implementations, however, the wireless communication network 100 can include one or more base stations that operate according to radio access technologies (RATs) of types other than NR, and these base stations can be connected to CNs of other CN types, or operated in a standalone mode without a connection to any CN.

The base station 104 covers a 5G NR cell 108 in which UEs can utilize the NR-U as well as portions of the radio spectrum allocated specifically to the service provider that operates the base station 104 and the core network 106. When receiving data from, and transmitting data to, the base station 104 using the 5G NR air interface, the UE 102 may share the NR-U with other devices. For example, a UE 110 can be a subscriber of the service provider that operates the base station 104 and the core network 106, and thus can communicate with the base station 104. In another scenario, the UE 110 is a subscriber of another service provider that supports the NR-U and communicates with a base station other than the base station 104 (not shown to avoid clutter). In this scenario, a user operates the base station 104 and connects the base station 104 to a data network of an Internet service provider (ISP). The base station 104 in this case operates similar to a WiFi access point (AP) but utilizes the NR-U instead of one of IEEE 802.11 standards to communicate with the UEs. Further, an AP 112 can utilize portions of the radio spectrum as the NR-U when operating in a wireless local area network (WLAN) according to one of IEEE 802.11standards.

In general, the wireless communication network 100 can include any number of base stations, and each of the base stations can cover one, two, three, or any other suitable number of cells.

The gNB 104 can transmit data to the UE 102 via multiple DL beams such as DL beams 120A, 120B, and 120C, for example. In general, the direction of the DL beams 120A-C need not be static, and in some implementations the gNB 104 dynamically modifies the direction of the DL beams 120A-C. The gNB 104 can transmit a respective CSI-RS, an SSB, or another suitable identifier on each of the DL beams 120A-C. Further, in some scenarios, the gNB 104 can generate only DL beam. Still further, the UE 102 in some scenarios can detect only one DL beam at a time.

The UE 102 is equipped with processing hardware 130 that can include one or more general-purpose processors (e.g., CPUs) and a non-transitory computer-readable memory storing instructions that the one or more general-purpose processors execute. Additionally or alternatively, the processing hardware 130 can include special-purpose processing units. The processing hardware130 in an example implementation includes a medium access control (MAC) entity 132 and a physical layer (PHY) entity 134. The MAC entity 132 and the PHY entity 134 can be configured to operate at the MAC and PHY layers, respectively, of the 5G NR radio interface between the UE 102 and the gNB 104.

Further, the MAC entity 132 in this example implementation includes an NR-U random access procedure (RAP) controller 142 and a beam detector 144, and the PHY entity 134 includes a channel access (CA) controller 146 configured to perform a listen-before-talk (LBT) procedure or another CA procedure.

In some scenarios, the gNB 104 broadcasts a master information block (MIB), system information block 1 (SIB 1) and/or a SIB other than the SIB 1 over the broadcast channel (BCH) or a downlink shared channel (DSCH) and the physical broadcast channel (PBCH), or a physical downlink shared channel (PDSCH) on the DL beams 120A-C. In some implementations, the gNB 104 includes in these broadcasts the configuration of the DL beams 120A-C. In other implementations, the gNB 104 does not include configuration of the DL beams 120A-C to the UE, and the UE 102 detects and receives the DL beams 120A-C according to a predetermined scheme (e.g., specified by a standard specification). In other scenarios, the gNB 104 provides the configuration of the DL beams 120A-C to the UE 102 via an RRC message such as *RRCReconfiguration* transmitted during the RRC reconfiguration procedure, *RRCSetup* transmitted during the RRC connection establishment procedure, *RRCReestablishment* transmitted during the RRC reestablishment procedure, or *RRCResume* or *RRCSetup* transmitted during the RRC connection resume procedure or the RRC connection reestablishment procedure. The configuration of DL beams 120A-C may include configuration of the respective CSI-RSs associated with the DL beams 120A-C or transmission configuration indication (TCI) state configuration.

When the UE 102 is in the RRC_IDLE mode, the UE 102 can perform a random access procedure on a bandwidth part (BWP), or a portion of a wide carrier bandwidth, to establish or resume an RRC connection with the gNB 104. When the UE 102 successfully completes the random access procedure and the RRC connection establishment procedure, the UE 102 uses the BWP as the active BWP. The gNB 104 subsequently can reconfigure the UE 102 with one or more BWPs using certain RRC messages. The gNB 104 also can issue a command to the UE 102 to switch from one BWP to another BWP.

When the UE 102 is in the RRC_INACTIVE mode, the UE 102 can perform a random access procedure on a BWP, or a portion of a wide carrier bandwidth, to resume an RRC connection with the gNB 104. When the UE 102 successfully completes the random access procedure and the RRC connection resume procedure, the UE 102 uses the BWP as the active BWP. The gNB 104 subsequently can reconfigure the UE 102 with one or more BWPs using certain RRC messages. The gNB 104 also can issue a command to the UE 102 to switch from one BWP to another BWP.

When the UE 102 is in the RRC_CONNECTED mode, the UE 102 can perform a random access procedure on a BWP, or a portion of a wide carrier bandwidth, to handover to the gNB 104, to request the gNB 104 to transmit an uplink grant to the UE 102, to reestablish an RRC connection with the gNB 104, or to respond to a physical downlink control channel (PDCCH) order.

In any case, the gNB 104 can specify, for each CSI-RS, SSB, or other identifier of a DL beam, a set of RA preambles and/or a set of RACH occasions for transmitting the corresponding RA preambles. Each RACH occasion can be a time-frequency resource. The configuration also can include an indication of which values the UE 102 should use when comparing the measurements for DL beams to thresholds. The gNB 104 can store this configuration of DL beams in the memory.

The beam detector 144 can detect zero, one, or more of the DL beams 120A-C with a quantitative metric above a certain threshold value. For example, the beam detector 144 can measure one or more of a reference signal received power (RSRP), a reference signal received quality (RSRQ), a received signal strength indicator (RSSI), a signal-to-noise-plus-interference ratio (SINR), etc. for each detected beam. As a more specific example, in the RSRP measurement category, the beam detector 144 can generate a synchronization signal RSRP (SS-RSRP) or a CSI-RSRP measurement, for example. The beam detector 144 in one example implementation generates this measurement for each detected DL beam and selects the DL beam with the highest measurement (i.e., the "best" DL beam). In another implementation, the beam detector 144 selects more than one DL beam, as long as the corresponding measurement is above a certain threshold value, i.e., the measurement indicates that the DL beam is "good enough." The beam detector 144 then can provide the CSI-RS or another suitable indicator of the selected DL beam to the NR-U RAP controller 142.

Using the identifier (s) of the one or more DL beams, the NR-U RAP controller 142 can select a set of parameters for a random access procedure. As indicated above, the parameters can include an RA preamble and a RACH occasion. For example, the NR-U RAP controller 142 selects an RA preamble and a RACH occasion associated with the "best" DL beam or the "good-enough" beam. To transmit the selected RA preamble, the NR-U RAP controller 142 can cause the CA controller 146 to assess whether the corresponding channel, e.g., the PRACH, is clear. The CA controller 146 in various implementations can determine whether the channel is clear prior to transmitting the preamble, during a time period that includes the RACH occasion, and other times.

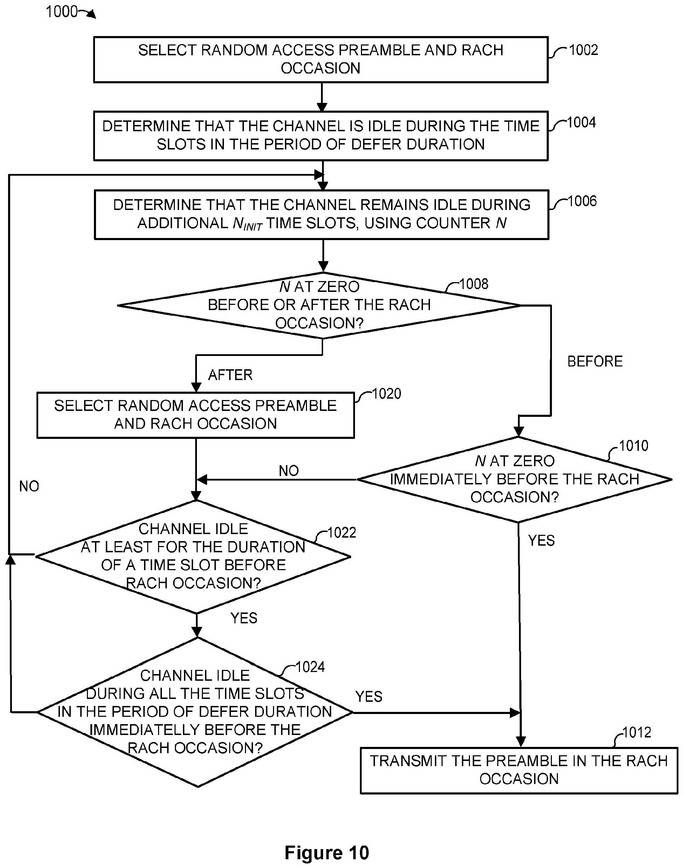

The CA controller 146 can implement a type I CA procedure according to which the UE 102 first senses the channel to be idle during multiple time slots that together span a period of defer duration *T_{d}.* The UE 102 then uses the counter *N* to count down to zero, sensing the channel for the one or more additional time slot durations. The defer duration *T_{d}* consists of an interval of duration *T_{f}* immediately followed by *mₚ* consecutive slot durations, each spanning *Tₛₗ.* This procedure is further considered below with reference to Fig. 10.

In another implementation, the CA controller 146 implements a type II CA procedure according to which the UE 102 transmits an RA preamble in a RACH occasion immediately after sensing the channel to be idle for at least a sensing interval *T_{short_ul}* (which may be 25 µs, for example). The sensing interval *T_{short_ul}* consists of an interval of duration *T_{f}* (which may be 16 µs, for example) immediately followed by the duration of one time slot *Tₛₗ* (which may be 9 µs, for example). The interval of duration *T_{f}* includes an idle time slot *Tₛₗ.* The CA controller 146 thus determines that the channel is idle for *T_{short_ul}* when the UE 102 senses that the channel is idle during all the time slots within the period of *T_{short_ul}*.

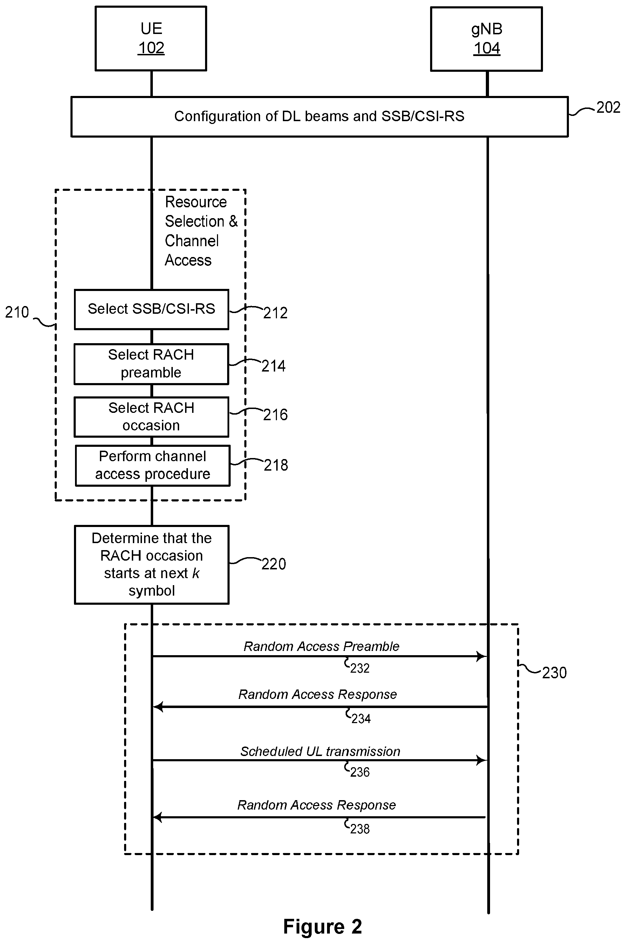

Now referring to Fig. 2, the UE 102 in this example scenario receives 202 a configuration of DL beams, the corresponding SSB/CSI-RS, RA preambles, PRACH opportunities, etc., using an MIB, an SIB 1, one or more RRC messages, etc., as discussed above.

The UE 102 then conducts 210 a set of procedures that includes resource selection and a CA procedure. For brevity, the terms "SSB" and "CSI-RS" in the discussion below can be used to refer to the corresponding DL beams. Thus, for example, "selecting the CSI-RS" refers to selecting the DL beam in which the CSI-RS is transmitted, and "selecting the SSB" refers to selecting the DL beam in which the SSB is transmitted.

The beam detector 144 or another suitable component of the UE 102 first selects 212 an SSB corresponding with the SS-RSRP above a certain threshold or a CSI-RS with the CSI-RS RSRP above another threshold. In one implementation, when none of SSBs or CSI-RSs are above the corresponding thresholds, or when more than one of the SSBs or the CSI-RSs are above the corresponding thresholds, the beam detector 144 selects the SSB with the best SS-RSRP or the CSI-RS with the best CS-RSRP.

After the UE 102 has selected the SSB or CSI-RS at block 212, the UE 102 selects 214 an RA preamble from among the RA preambles associated with the select SSB or CSI-RS. The UE 102 further selects 216 a RACH occasion from among the RACH occasions associated with the select SSB or CSI-RS. The UE 102 can execute blocks 214 and 216 in any order, and thus the UE 102 in some implementations first selects an RA preamble and then a RACH occasion, and in other implementations first selects a RACH occasion and then an RA preamble. Referring back to Fig. 1, the NR-U RAP controller 142 for example can perform the selections 214 and 216, based on the selection 212 of the SSB or CSI-RS. As indicated above, the RACH occasion can correspond to time-frequency resources in which the UE 102 can transmit the RA preamble. In another implementation, the UE 102 first selects a set of two or more RACH occasions associated with the SSB or CSI-RS, such that each of the RACH occasions occurs at a different time. The UE 102 then selects one of these RACH occasions for transmitting the RA preamble.

The UE 102 then performs 218 a CA procedure. When the UE 102 determines 220, at a time when *N* = 0, that the RACH occasion starts at the next *k* orthogonal frequency divisional multiplexing (OFDM) symbol (e.g., *k* = 1), the UE 102 can transmit 232 the RA preamble of the random access procedure 230.

In some scenarios, the UE 102 cannot complete the CA procedure 218 because the channel remains busy for a long time. The UE 102 in one implementation starts a timer immediately upon starting the CA procedure and, if UE 102 cannot complete the CA procedure before the timer expires, the UE 102 reconfigures the primary cell (PCell) or the secondary cell (SCell) in which the UE 102 performs the first CA procedure, or the UE 102 performs the RRC connection reestablishment procedure. The UE 102 stops the timer if the CA procedure completes before the timer expires.

In the scenario of Fig. 2, the UE 102 transmits 232 the RA preamble upon completing the CA procedure. The gNB 104 then transmits 234 to the UE 102 a random access response including an uplink grant. The gNB 104 transmits the random access response on the DL beam to which the selected RA preamble corresponds. For example, referring back to Fig. 1, if the UE selects 212 the CSI-RS of the DL beam 120A, and selects 214 an RA preamble associated with the selected CSI-RS, the gNB 104 also transmits 234 the random access response on the DL beam 120A. The UE 102 then transmits 236 a scheduled UL transmission using the uplink grant. The gNB 104 in response transmits 238 a contention resolution message, to resolve the contention. As illustrated in Fig. 2, the transmissions 232, 234, 236, and 238 together make up the random access procedure 230.

In another scenario, by the time the UE 102 completes the CA procedure, the UE 102 has already transmitted the RA preamble. For example, UE 102 can initiate a first instance of the CA procedure on a first carrier frequency and a second instance of the CA procedure on a second carrier frequency. In this manner, the UE 102 increases the probability of successfully transmitting the RA preamble. Thus, the first and second instances of the CA procedure can proceed concurrently. The UE 102 may be able to transmit the RA preamble on the second channel as a result of the second instance of the CA procedure, while the first instance of the CA procedure is still ongoing on the first channel. As a result, by the time the UE 102 completes the first instance of the CA procedure, the UE 102 has already transmitted the RA preamble.

In yet another scenario, the UE 102 completes the CA procedure and cannot transmit the RA preamble (e.g., because the CA procedure reveals that the channel is busy). In one implementation, the UE 102 increases the size *CWₚ* of the contention window. For example, the UE 102 can manage the size of the contention window in accordance with the specification 3GPP TS 37.213 which specifies several parameters for different channel access priority classes. As a more specific example, for priority 3 and current size *CW₃ =* 31, the UE 102 can increase the size to *CW₃ =* 63.

In some cases, the UE 102 continues to fail when attempting to transmit an RA preamble. The UE 102 in one implementation increases a fail counter by one each time the UE 102 fails to transmit the selected RA preamble. When the value of the fail counter exceeds a threshold value, the UE 102 in this implementation reconfigures the PCell or the SCcell or performs the RRC connection reestablishment procedure, similar to the example handling of the channel being busy discussed above.

On the other hand, when the UE 102 successfully transmits the RA preamble after the conducting the CA procedure, the UE 102 can reset the size of the contention window to the minimum value (e.g., *CWₚ = CW_{min, p}).* The UE 102 also can reset the fail counter to zero.

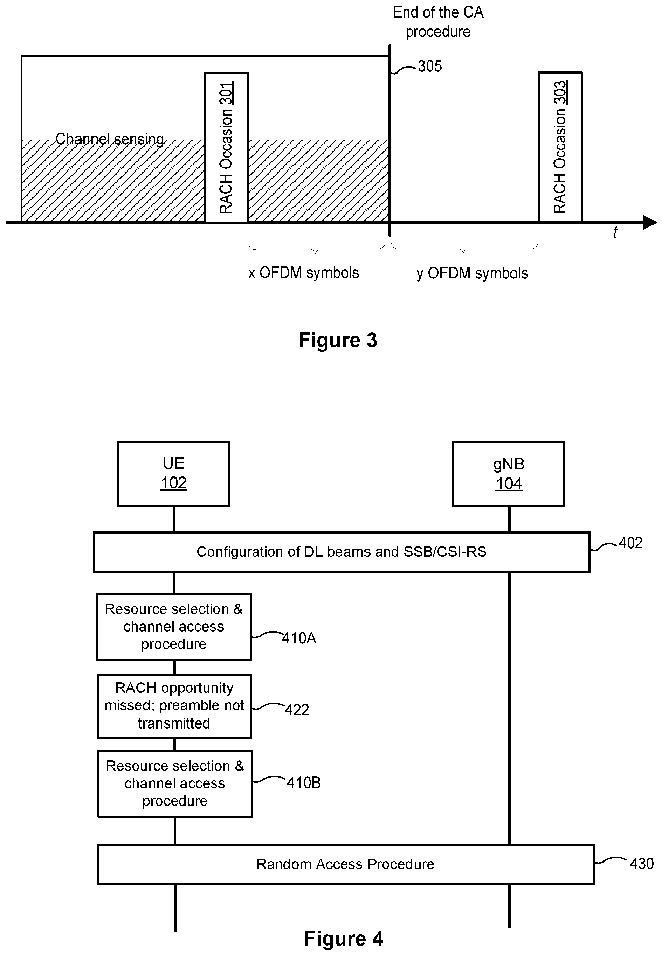

Referring for clarity to the timing diagram of Fig. 3, in other scenarios an end 305 of the CA procedure can occur *x* OFDM symbols (x > 1) after the RACH occasion 301, or y OFDM symbols (y > 1) before the RACH occasion 303. Thus, in one scenario the UE 102 does not transmit the RA preamble upon completion of the CA procedure because the CA procedure completes after the RACH occasion 301. In another scenario, the UE 102 does not transmit the RA preamble upon completion of the CA procedure because the RACH occasion 303 is still in the future.

The UE 102 can operate as illustrated in Fig. 4 when the end 305 of the CA procedure occurs after the RACH occasion 301. The UE 102 in this scenario receives 402 the configuration from the gNB 104, similar to event 202 discussed above. The UE 102 then performs 410A, in the first instance, a set of procedures that includes selecting an SSB/CSI-RS, selecting the RACH preamble based on the selected SSB/CSI-RS, selecting the RACH occasion based on the selected SSB/CSI-RS, and performing a CA procedure, similar to the set of procedures 210 discussed above. The UE 102 determines 422 that the UE 102 missed the RACH occasion and, in response, performs 410B another instance of the set of set of procedures similar to the set 210. More specifically, the UE 102 in this case selects a new SSB/CSI-RS, selects a new RA preamble and a new RACH occasion, and performs a new CA procedure.

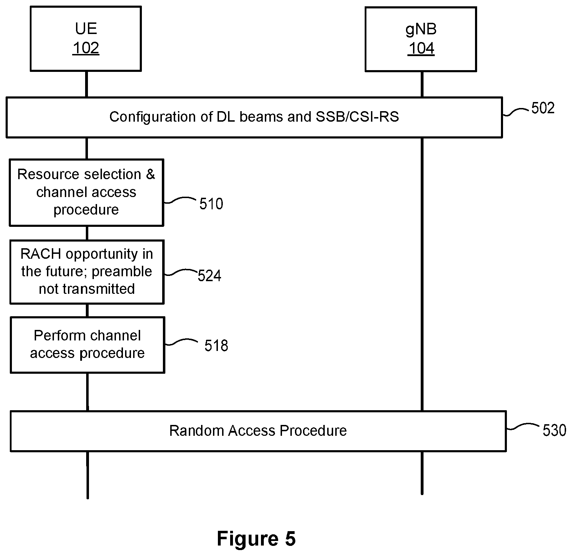

On the other hand, when the end 305 of the CA procedure occurs more than one OFDM symbol before the RACH occasion 303, the UE 102 can operate as illustrated in Fig. 5. In this case, the UE 102 receives 502 the configuration from the gNB 104, similar to events 202 and 402 discussed above. The UE 102 then performs 510, in the first instance, a set of procedures that includes selecting an SSB/CSI-RS, selecting the RACH preamble based on the selected SSB/CSI-RS, selecting the RACH occasion based on the selected SSB/CSI-RS, and performing a CA procedure, similar to the set of procedures 210 and 410A discussed above. The UE 102 determines 524 that that the RACH occasion occurs in the future and, in response, performs 518 a new channel access procedure. The UE 102 in this scenario does not select a new CSI-RS/SSB.

Referring to Figs. 4 and 5, the UE 102 in another example scenario selects a set of two or more RACH occasions. When the UE 102 has missed all of the RACH occasions upon completing the CA procedure, the UE 102 selects a new CSI-RS/CCB, similar to the scenario of Fig. 4. However, when the UE 102 has missed all but one PRACH occasion, which occurs in the future, the UE 102 operates as depicted in Fig. 5 and only performs the new CA procedure.

Still referring to Figs. 4 and 5, when the UE 102 performs the CA procedure in the second or subsequent instance (events 410B and 518), the UE 102 can perform the CA procedure similar to the first instance, except that the UE 102 can omit the exponential backoff procedure when the channel is idle. In other words, unlike performing the CA procedure in the first instance, in the second instance there is no need for the UE 102 to perform the exponential backoff procedure, unless the channel is busy.

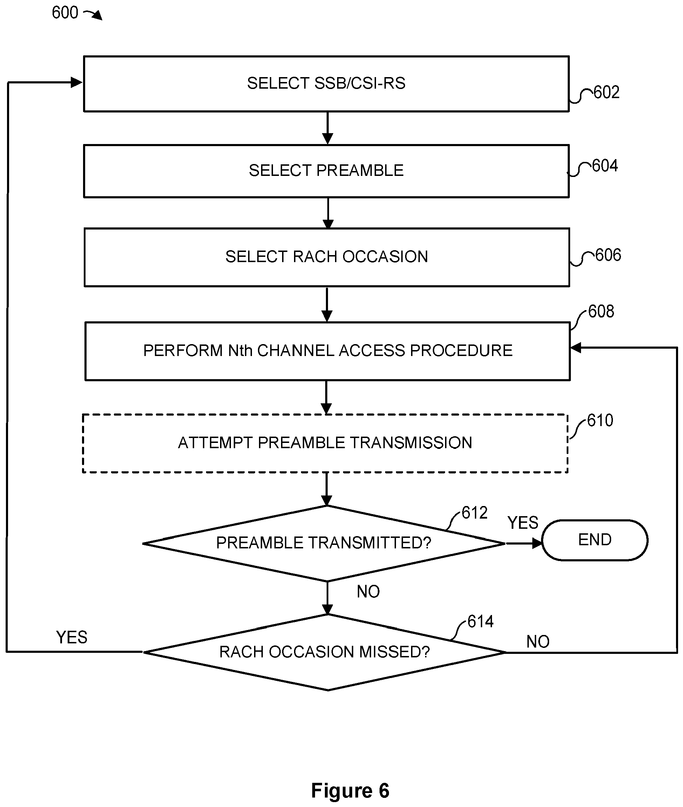

For further clarity, Fig. 6 illustrates a flow diagram of an example method 600 for selecting and transmitting a random access preamble, which can be implemented in any suitable processing hardware, e.g., as a set of instructions stored in a computer-readable memory and executable by one or more processors. The method 600 is discussed below with reference to the UE 102, but in general this method can be implemented in any suitable device.

At block 602, the UE 102 selects SSB/CSI-RS (e.g., event 212 in Fig. 2; see also events 410A and 410B in Fig. 4 and event 510A in Fig. 5). Next, at block 604, the UE 102 selects a preamble (e.g., event 214 in Fig. 2; see also events 410A and 410B in Fig. 4 and event 510A in Fig. 5). At block 606, the UE 102 selects a RACH occasion (e.g., event 216 in Fig. 2; see also events 410A and 410B in Fig. 4 and event 510A in Fig. 5).

Then, at block 608, the UE 102 performs an Nth CA procedure (e.g., event 218 in Fig. 2 and event 518 of Fig. 5; see also events 410A and 410B in Fig. 4 and event 510A in Fig. 5). In some cases, the UE 102 transmits (or at least attempts to transmit) an RA preamble at block 610, after completing the CA procedure or during the CA procedure as discussed above (event 232; see also event 430 in Fig. 4 and event 520 in Fig. 5).

When the UE 102 determines at block 612 that the RA preamble has been transmitted, the method 600 completes. Otherwise, when the UE 102 determines at block 612 that the RA preamble has been not transmitted, the flow proceeds to block 614. When the UE 120 then determines at block 614 that the UE 102 has missed the RACH occasion, the flow proceeds to block 602 (see the scenario of Fig. 4). Otherwise, when the UE 120 determines at block 614 that the RACH occasion is in the future, the flow proceeds to block 608 (see the scenario of Fig. 5).

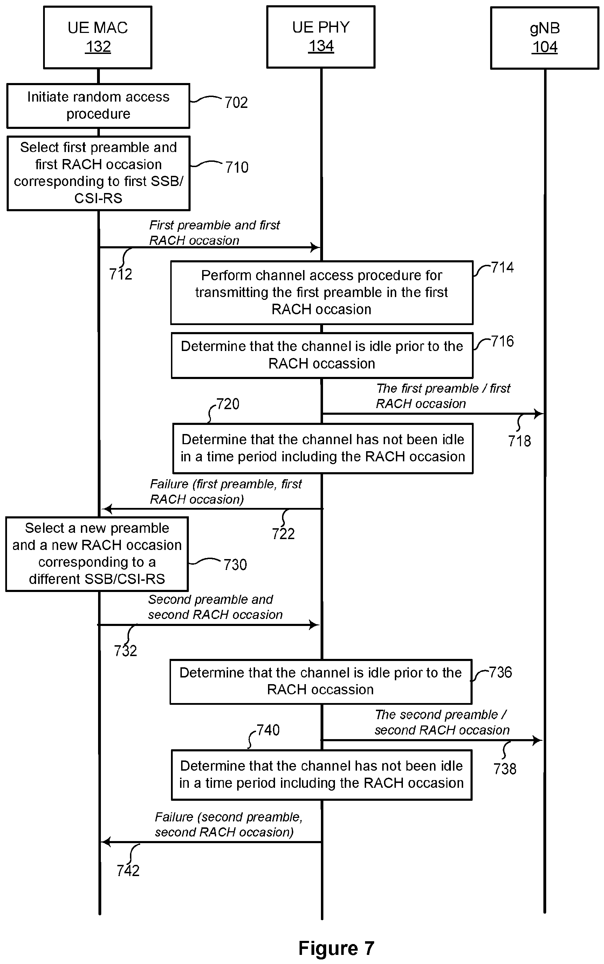

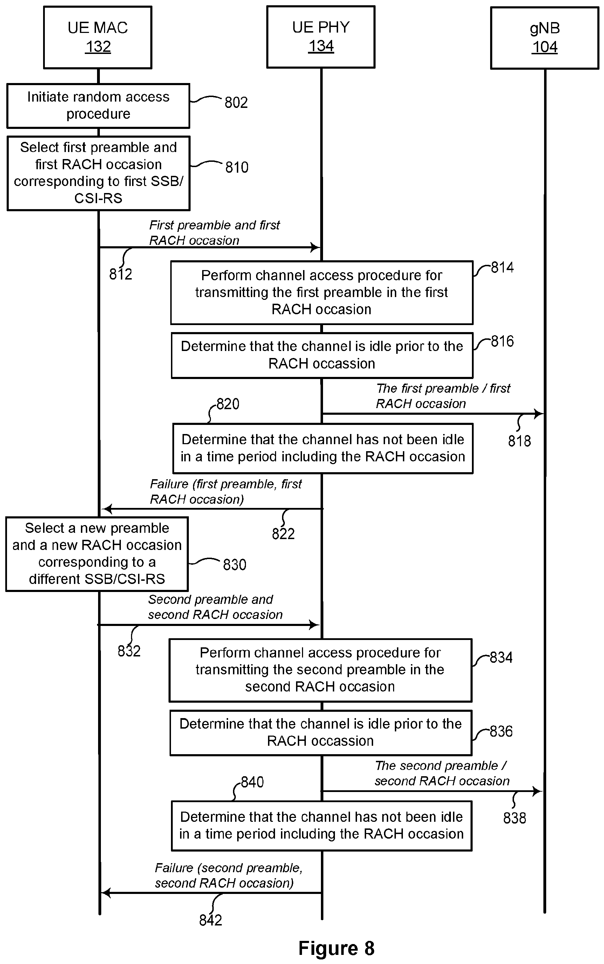

Next, Figs. 7 and 8 illustrate additional example scenarios in which the UE 102 selects a new CSI-RS/SSB after determining that the transmission of the RA preamble has failed. Operation of the UE 102 is discussed with reference to the MAC entity 132, also referred to below as "UE MAC 132," and the PHY entity 134, also referred to below as "UE PHY 134." Generally speaking, the UE 102 in the scenarios of Figs. 7 and 8 determines whether the channel is still idle at the time of the RACH occasion, i.e., during a certain time period that includes the RACH occasion.

Referring first to Fig. 7, the UE MAC 132 initiates 702 a random access procedure. The UE MAC 132 selects 710 a first RA preamble and a first RACH occasion that correspond to the first CSI-RS/SSB, similar to the discussion above. The UE MAC 132 then provides 712 the first RA preamble and the first RA occasion to the UE PHY 134. The UE PHY 134 in response performs 714 a CA procedure to determine whether the channel is idle prior to the first RACH occasion.

As illustrated in Fig. 7, the UE PHY 134 transmits 718 the RA preamble during the first RA occasion, when the CA procedure indicates 716 that the channel is idle prior to the first RACH occasion. The UE PHY 134 then determines 720 that the channel has not been idle during a time period including the first RACH occasion, according to the CA procedure initiated at event 714. More particularly, the UE PHY 134 can determine that the channel is not idle at the time when the first RACH occasion occurs, or after the first RACH occasion occurs (when the period during which the UE 102 senses the channel extends past the end of the first RACH occasion). In response to determining that the channel has not been idle, the UE 102 provides 722 to the UE MAC 132 a failure indication for the first RA preamble and the first RACH occasion.

The UE MAC 132 then selects 730 another, second RA preamble and a second RACH occasion that correspond to a second CSI-RS/SSB. Thus, the UE MAC 132 in this case selects a new DL beam. The UE MAC 132 provides 732 to the UE PHY 134 the second RA preamble and the second RA occasion. The UE PHY 134 then can determine 736 that the channel to which the RACH occasion corresponds is idle prior to the second RACH occasion. The UE PHY 134 transmits 738 the second RA preamble during the second RA occasion, when the CA procedure indicates 736 that the channel is idle prior to the second RACH occasion.

In another example, the UE 102 determines 740 that the channel has not been idle during a time period including the second occasion. The UE 102 provides 742 to the UE MAC 132 a failure notification regarding the second preamble and the second RACH occasion, when the CA procedure indicates 740 that the channel has not been idle. In response, the UE MAC 132 can select a third RA preamble and a third RACH occasion corresponding to a third CSI-RS/SSB, and again determines whether the channel has been idle or not using the CA procedure, etc. The UE 102 can continue performing the CA procedure until the UE transmits a RA preamble in a RACH occasion.

The scenario of Fig. 8 is generally similar to the scenario of Fig. 7, but in this case the UE 102 performs another channel access procedure after selecting a new CSI-RS/SSB. More specifically, the events 802-832 are similar to the corresponding events 702-732 of Fig. 7. After the UE MAC 132 provides 832 to the UE PHY 134 the second RA preamble and the second RA occasion, the UE PHY 134 performs 834 a second CA procedure. Depending on the implementation, the carrier frequency on which the UE PHY 134 performs the second CA procedure can be different from or the same as the carrier frequency on which the UE PHY 134 performs 814 the first CA procedure. The UE PHY 134 and the UE MAC 132 then proceed to generate or handle events 836-842, which are similar to the corresponding events 736-742 discussed with reference to Fig. 7. In some cases, the second RA preamble is identical to the first RA preamble and/or the second RACH occasion is identical to the first RACH occasion, if the UE 102 still selects the CSI-RS/SSB after receiving 822 the failure notification. In some implementations, the UE MAC 132 may not indicate 832 the second RA preamble and the second RACH occasion if the second RA preamble and the second RACH occasion are identical to the first RA preamble and the first RACH occasion, respectively. The UE PHY 134 continues to use the first RA preamble and the first RACH occasion if the UE PHY 134 does not receive the second RA preamble and the second RACH occasion. In other implementations, the UE MAC 132 indicates 832 the second RA preamble and the second RACH occasion irrespective of whether the second RA preamble and the second RACH occasion are identical to the first RA preamble and the first RACH occasion, respectively.

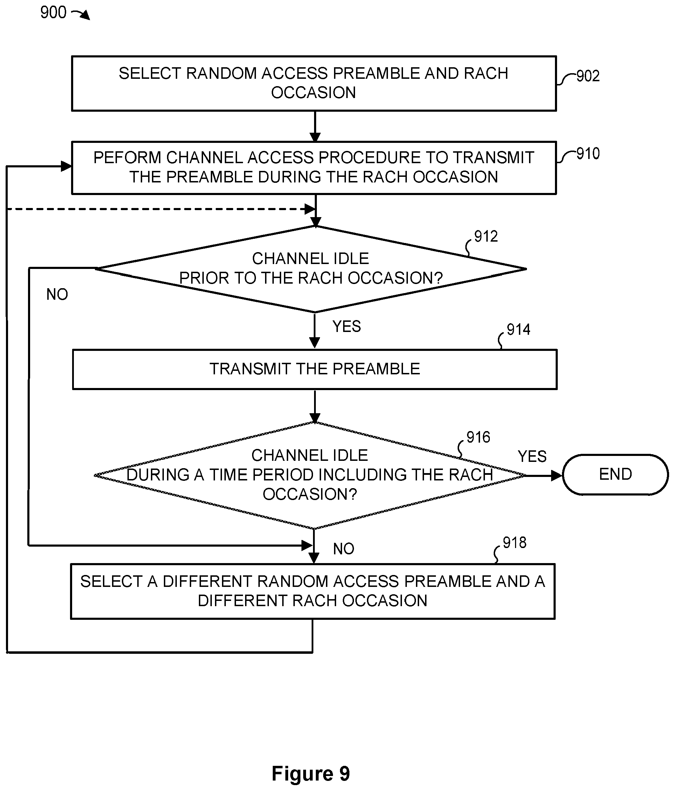

Next, Fig. 9 illustrates an example method 900 for selecting a random access preamble and an occasion for transmitting the random access preamble. The method 900 is discussed below with reference to the UE 102, but in general this method can be implemented in any suitable device.

At block 902, the UE 102 selects an RA preamble and a RACH occasion (event 710 in Fig. 7 and event 810 in Fig. 8). As discussed above, the UE 102 can select these parameters in accordance with a CSI-RS/SSB the UE 102 previously selects. Next, at block 910, the UE 102 performs a CA procedure in order to transmit the RA preamble during the RACH occasion (event 714 in Fig. 7 and event 814 in Fig. 8). In some implementations, the UE 102 performs the CA procedure in accordance with channel access priority class (CPAC). Channel access priority classes range in priority from a highest priority (e.g., CAPC 1) to a lowest priority (e.g., CAPC 4), and channel access priority classes correspond to the maximum, minimum, and allowed sizes of contention windows, the maximum link occupancy time, the number of consecutive durations for deferral (measured in milliseconds and/or slots of a certain duration, where the duration in turn is based on subcarrier spacing used for communication between a UE and a base station), and other time-based parameters which devices utilize when performing the CA procedure. An example of the CA procedure is as described in 3GPP TS 37.213.

At block 912, the UE 102 determines whether the channel is idle prior to the RACH occasion (event 716 in Fig. 7 and event 816 in Fig. 8) and, if so, the flow proceeds to block 914. Otherwise, when the UE 102 determines that the channel is not idle prior to the RACH occasion, the flow proceeds to block 918. The UE 102 transmits the RA preamble at block 914 (event 718 in Fig. 7 and event 818 in Fig. 8). However, even if the UE 102 has successfully transmitted the RA preamble at block 914, the UE 102 at block 916 determines whether the channel has been idle during a time period that includes the RACH occasion, in accordance with the CA procedure (event 720 in Fig. 7 and event 820 in Fig. 8). If the channel has been idle during this time period, the method 900 completes, and the UE 102 proceeds to monitor the same DL beam for the response to the RA preamble (i.e., a random access response message, as illustrated in Fig. 2).

Otherwise, if the channel has not been idle during the time period that includes the RACH occasion, the flow proceeds to block 918, where the UE 102 selects a different RA preamble and a different RACH occasion (event 730 in Fig. 7 and event 830 in Fig. 8). The UE 102 selects these parameters for a different CSI-RS/CCB. In other words, the UE 102 selects a different DL beam.

In one implementation, the flow then returns to block 912 (see Fig. 7), where the UE 102 determines whether the CA procedure has indicated that the channel is idle prior to the new (second) RACH occasion (event 736 in Fig. 7). It is noted that the UE 102 can attempt to access the same uplink (UL) channel after switching from one DL beam to another DL beam, and thus the CA procedure in at least some of the cases can pertain to the first PRACH occasion and the second PRACH occasion.

In another implementation, the flow returns from block 918 to block 910 (see Fig. 8), where the UE 102 performs a new CA procedure (event 834 in Fig. 8).

In some cases, the UE 102 determines that the CA procedure (e.g., one of the CA procedures described above) has indicated that the channel is idle at a first time that occurs a certain amount of time (e.g., *N* OFDM slots or subframes, where N = 1, 2, 3, ..., etc.) prior to a RACH occasion. Because the UE 102 cannot safely assume that the channel is still idle at the RACH occasion, the UE 102 starts a new CA procedure on the channel at a second time after the first time and before the RACH occasion. In some implementations, the new CA procedure is identical to the CA procedure in type, category, and/or duration. In other implementations, however, the new CA procedure differs from the CA procedure in type, category, and/or duration. For example, the first and second CA procedures may correspond to different categories (i.e., category 1, 2, 3, or 4) as defined in 3GPP TS 38.899. As another example, the first and second CA procedures may correspond to different channel access procedures defined in 3GPP TS 37.213 (e.g., with the first procedure can be a "type I uplink" channel access procedure and the second procedure can be a "type II uplink" channel access procedure). As a more specific example, the first CA procedure may be a variable-duration procedure (e.g., with a randomly determined contention window duration), and the second CA procedure may be a shorter, fixed-duration procedure.

Next, Fig. 10 illustrates an example method 1000 for selecting a random access preamble and an occasion for transmitting the random access preamble in view of the idle intervals on the channel. The method 1000 also can be implemented in the UE 102 or another suitable device. Similar to processing block 902 of the method 900, the UE 102 at block 1002 selects an RA preamble and a RACH occasion (event 710 in Fig. 7 and event 810 in Fig. 8). The UE 102 then initiates channel sensing as a part of the CA procedure, which Fig. 10 illustrates in more detail than Fig. 9.

At block 1004, the UE 102 determines that the channel is idle in the time slots that make up an interval of defer duration *T_{d}.* The UE 102 at block 1006 determines whether the channel remains idle during the additional *Nᵢₙᵢₜ* time slots. The time slot for sensing the channel can be different from a time slot made up of 14 OFDM symbols defined in 3GPP NR specification. For example, the duration of the time slot used for sensing the channel can be 9 µs.

For example, a block 1006 the UE 102 can perform the type I procedure which can be summarized as the six steps below.
1) The UE 102 initially sets *N = Nᵢₙᵢₜ,* where *Nᵢₙᵢₜ* is a random number uniformly distributed between 0 and *CWₚ,* which is the size of the contention window.
2) The UE 102 decrements the counter (i.e., *N = N* - 1) while *N* > 0.
3) At this step, when the UE 102 senses the channel to be idle for an additional slot duration, the UE 102 proceeds to step four. When the UE 102 senses the channel to be busy for the additional slot duration, the UE 102 proceeds to step five.
4) If the counter *N* is at zero (i.e., *N =* 0), the UE 102 stops the CA procedure. Otherwise, the UE 102 returns to step two.
5) The UE 102 continues channel sensing until the UE 102 either detects a busy time slot within an interval of duration *T_{d},* or the UE 102 determines that all the time slots within the interval of duration *T_{d}* are idle.
6) When UE 102 determines that all the time slots within the interval of duration *T_{d}* are idle, the UE 102 returns to step four. The UE 102 otherwise returns to step five.

With continued reference to Fig. 10, the flow proceeds to block 1008, where the UE 102 determines whether *N* is at zero before or after the RACH occasion. If the counter *N* reaches zero before the RACH occasion, the flow proceeds to block 1010; otherwise, the flow proceeds to block 1020. More specifically, the flow proceeds to block 1020 to select a new RA preamble and a new RACH occasion upon determining that the CA procedure has ended only after the RACH occasion, and thus the RACH occasion is in the past (see, for example, even 720 in Fig. 7 and event 820 in Fig. 8).

At block 1010, the UE 102 determines whether the counter *N* is at zero immediately before the RACH occasion. The UE 102 transmits the RA preamble during the RACH occasion if the *N* is at zero immediately before the RACH occasion, i.e., if the channel is idle during a time period immediately prior to the RACH occasion. The flow otherwise proceeds to blocks 1022.

At block 1020, the UE 102 selects a new RA preamble and a new RACH occasion (see event 730 in Fig. 7 and event 830 in Fig. 8). The UE 102 then determines whether the channel is idle for the duration of at least one time slot prior to the new RACH occasion, at block 1022. In another scenario, however, the flow proceeds from decision block 1010 to block 1022, where the UE 102 determines whether the channel is idle for the duration of at least one time slot prior to the previously selected RACH occasion. Thus, at block 1022, the UE 102 can apply the check to the original RACH occasion or the new RACH occasion, depending on the scenario.

At block 1024, the UE 102 can determine that the channel is idle during all the time slots in an interval of defer duration *T_{d},* and proceed to block 1012 to transmit the RA preamble. Otherwise, when the UE 102 determines that the channel is not idle during all the time slots in an interval of defer duration *T_{d},* the flow returns to block 1006.

Thus, if the UE 102 has not transmitted the RA preamble on the channel after step four in the CA procedure above (see the discussion of block 1006 above), the UE 102 may transmit the RA preamble on the channel, if (i) the channel is idle at least for the time slot duration when the UE 102 is ready to transmit the RA preamble, according to the CA procedure, and (ii) if the channel has been idle during all the slots in the interval of the defer duration immediately before the RACH occasion, according to the CA procedure. When the results of the CA procedure indicate that the channel has not been idle in for a time slot duration when the UE 102 first senses the channel after being ready to transmit, or if the channel has not been idle during any of the time slots in the interval of the defer duration, the UE 102 can proceed to step 1 of the CA procedure after sensing the channel to be idle during the interval of the defer duration. As indicated above, an interval of defer duration *T_{d}* can consist of an interval of duration *T_{f}* immediately followed by *mₚ* consecutive slot durations, each spanning *Tₛₗ.* The UE 102 can consider the time slot of duration *Tₛₗ* to be idle if the UE 102 senses the channel to be idle for the duration of time slot, and if the UE 102 detects power for at least x µs (e.g., x = 4) during this slot that is below the energy threshold *Xₜₕᵣₑₛₕ.* The UE 102 otherwise determines that the time slot is busy.

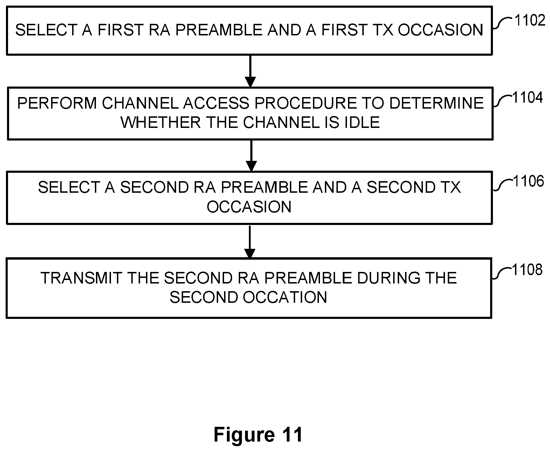

For clarity, Fig. 11 illustrates an example method 1100 that can be implemented in a suitable UE such as the UE 102, for example.

At block 1102, the UE selects a first RA preamble and a first occasion for transmitting the first RA preamble (events 214 and 216 of Fig. 2, event 410A of Fig. 4, event 510A of Fig. 5, blocks 604 and 606 of Fig. 6, event 710 of Fig. 7, event 810 of Fig 8, block 902 of Fig. 9, block 1002 of Fig. 10).

Next, at block 1104, the UE performs a channel access procedure to determine whether the channel is idle (event 218 of Fig. 2, event 410A of Fig. 4, event 510A of Fig. 5, block 608 of Fig. 6, event 714 of Fig. 7, event 814 of Fig. 8, block 910 of Fig. 9, blocks 1004-1008 of Fig. 10).

At block 1106, the UE selects a second RA preamble and a second occasion to transmit the second RA preamble (event 410B of Fig. 2, blocks 604 and 606 of Fig. 6, event 730 of Fig. 7, event 830 of Fig. 8, block 918 of Fig. 9, block 1020 of Fig. 10).

At block 1108, the UE transmits the second RA preamble during the second occasion, to thereby initiate an exchange of messages of the random access procedure, with the base station (event 430 of Fig. 4, event 530 of Fig. 5, block 610 of Fig. 6, block 738 of Fig. 7, block 838 of Fig. 8, block 914 of Fig. 9, block 1012 of Fig. 10).

The following additional considerations apply to the foregoing discussion.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method in a user equipment, UE (102), for performing a random access procedure in an unlicensed spectrum, the method comprising:
selecting (810), by processing hardware (130) and based on a first channel state information reference signal, CSI-RS, or a first synchronization signal block, SSB, a first random access, RA, preamble and a first occasion for transmitting the first RA preamble to a base station (104);
performing (814), by the processing hardware (130), a first channel access, CA, procedure including transmitting the first RA preamble during the first occasion, to determine whether a channel to which the first occasion corresponds is idle;
in response to detecting a failure related to the first CA procedure, selecting (830) a second RA preamble different from the first RA preamble and a second occasion for transmitting the second RA preamble to the base station (104), the second occasion different from the first occasion, based on a second CSI-RS different from the first CSI-RS or a second SSB different from the first SSB; and
performing (834), by the processing hardware (130), a second CA procedure including transmitting the second RA preamble during the second occasion, to determine whether a channel to which the second occasion corresponds is idle.

2. The method of claim 1, further comprising receiving the first CSI-RS or the first SSB, and the second CSI-RS or the second SSB, via at least one network message from the base station (104).

3. The method of claim 1 or 2, further comprising:
receiving, from the base station (104), a radio resource control, RRC, configuration that specifies a plurality of RA preambles and a plurality of occasions for transmitting an RA preamble.

4. The method of any of claims 1-3, wherein:
performing (814) the first CA procedure includes determining (816) whether the channel is idle prior to the first occasion, and
detecting the failure includes determining (820) that the channel is not idle during a time period that includes the first occasion.

5. The method of claim 4, further comprising transmitting (838) the second RA preamble to the base station (104) during the second occasion and in response to determining, during the second CA procedure, that the channel is idle prior to the second occasion.

6. The method of claim 4, further comprising:
receiving (822), from a physical layer, PHY, entity (134) by a medium access control, MAC, entity (132), an indication that the channel is not idle during the time period that includes the first occasion.

7. The method of any of claims 1-3, wherein detecting the failure includes determining that the channel is busy.

8. The method of any of claims 1-3, wherein performing (814, 834) the first CA procedure and the second CA procedure includes performing a listen-before-talk, LBT, procedure.

9. The method of any of claims 1-3, further comprising:
incrementing, by the processing hardware (130), a counter after selecting the second RA preamble and the second occasion for transmitting the second RA preamble;
comparing, by the processing hardware (130), the counter to a threshold value; and
aborting, by the processing hardware (130), the random access procedure in response to the counter exceeding the threshold value.

10. The method of any of claims 1-3, further comprising:
starting, by the processing hardware (130), a timer upon initiating the first CA procedure; and
when the timer expires before the first CA procedure completes, performing at least one of: a reconfiguration of at least one of a primary or a secondary cell in which the channel is provided; or an RRC connection establishment procedure.

11. The method of any of claims 1-3, further comprising:
in response to determining that the second CA procedure has been performed using the second RA preamble, resetting a size of a contention window.

12. The method of any of claims 1-3, wherein detecting the failure includes receiving (822) a failure indication at a MAC entity (132) from a PHY entity (134).

13. A user equipment, UE (102), comprising processing hardware (130) configured to execute a method according to any of the preceding claims.

## Patentansprüche

1. Verfahren in einer Benutzerausrüstung, UE (102), zum Durchführen einer Prozedur für einen wahlfreien Zugriff in einem unlizenzierten Spektrum, wobei das Verfahren Folgendes umfasst:
Auswählen (810), durch Verarbeitungshardware (130) und auf der Basis eines ersten Kanalzustandsinformationsreferenzsignals, CSI-RS, oder eines ersten Synchronisationssignalblocks, SSB, einer ersten Präambel für einen wahlfreien Zugriff, RA, und einer ersten Gelegenheit zum Übertragen der ersten RA-Präambel an eine Basisstation (104);
Durchführen (814), durch die Verarbeitungshardware (130), einer ersten Prozedur für einen Kanalzugriff, CA, einschließlich des Übertragens der ersten RA-Präambel während der ersten Gelegenheit, um festzustellen, ob ein Kanal, dem die erste Gelegenheit entspricht, inaktiv ist;
Auswählen (830), als Reaktion auf das Erkennen eines Fehlers in Bezug auf die erste CA-Prozedur, einer zweiten RA-Präambel, die sich von der ersten RA-Präambel unterscheidet, und einer zweiten Gelegenheit zum Übertragen der zweiten RA-Präambel an die Basisstation (104), wobei sich die zweite Gelegenheit von der ersten Gelegenheit unterscheidet, auf der Basis eines zweiten CSI-RS, das sich vom ersten CSI-RS unterscheidet, oder eines zweiten SSB, der sich vom ersten SSB unterscheidet; und
Durchführen (834), durch die Verarbeitungshardware (130), einer zweiten CA-Prozedur einschließlich des Übertragens der zweiten RA-Präambel während der zweiten Gelegenheit, um festzustellen, ob ein Kanal, dem die zweite Gelegenheit entspricht, inaktiv ist.

2. Verfahren nach Anspruch 1, das ferner das Empfangen des ersten CSI-RS oder des ersten SSB, und des zweiten CSI-RS oder des zweiten SSB, über mindestens eine Netzwerknachricht von der Basisstation (104) umfasst.

3. Verfahren nach Anspruch 1 oder 2, das ferner Folgendes umfasst:
Empfangen, von der Basisstation (104), einer Radio Resource Control-Konfiguration, RRC, die eine Vielzahl von RA-Präambeln und eine Vielzahl von Gelegenheiten zum Übertragen einer RA-Präambel spezifiziert.

4. Verfahren nach einem der Ansprüche 1-3, wobei:
das Durchführen (814) der ersten CA-Prozedur das Feststellen (816) einschließt, ob der Kanal vor der ersten Gelegenheit inaktiv ist, und
das Erkennen des Fehlers das Feststellen (820) einschließt, dass der Kanal während eines Zeitraums, der die erste Gelegenheit einschließt, nicht inaktiv ist.

5. Verfahren nach Anspruch 4, das ferner das Übertragen (838) der zweiten RA-Präambel an die Basisstation (104) während der zweiten Gelegenheit und als Reaktion auf das Feststellen, während der zweiten CA-Prozedur, dass der Kanal vor der zweiten Gelegenheit inaktiv ist, umfasst.

6. Verfahren nach Anspruch 4, das ferner Folgendes umfasst:
Empfangen (822), von einer Entität der Bitübertragungsschicht, PHY, (134) durch eine Media Access Control-Entität, MAC, (132), einer Angabe, dass der Kanal während des Zeitraums, der die erste Gelegenheit einschließt, nicht inaktiv ist.

7. Verfahren nach einem der Ansprüche 1-3, wobei das Erkennen des Fehlers das Feststellen einschließt, dass der Kanal aktiv ist.

8. Verfahren nach einem der Ansprüche 1-3, wobei das Durchführen (814, 834) der ersten CA-Prozedur und der zweiten CA-Prozedur das Durchführen einer Listen-before-Talk-Prozedur, LBT, einschließt.

9. Verfahren nach einem der Ansprüche 1-3, das ferner Folgendes umfasst:
Inkrementieren, durch die Verarbeitungshardware (130), eines Zählers nach dem Auswählen der zweiten RA-Präambel und der zweiten Gelegenheit zum Übertragen der zweiten RA-Präambel;
Vergleichen, durch die Verarbeitungshardware (130), des Zählers mit einem Schwellenwert; und
Abbrechen, durch die Verarbeitungshardware (130), der Prozedur für einen wahlfreien Zugriff als Reaktion darauf, dass der Zähler den Schwellenwert überschreitet.

10. Verfahren nach einem der Ansprüche 1-3, das ferner Folgendes umfasst:
Starten, durch die Verarbeitungshardware (130), eines Zeitgebers nach dem Einleiten der ersten CA-Prozedur; und
Durchführen, wenn der Zeitgeber abläuft, bevor die erste CA-Prozedur abgeschlossen ist, mindestens einer von Folgendem: einer Umkonfiguration mindestens einer von einer primären oder einer sekundären Zelle, in der der Kanal bereitgestellt ist; oder einer RRC-Verbindungsaufbauprozedur.

11. Verfahren nach einem der Ansprüche 1-3, das ferner Folgendes umfasst:
Zurücksetzen, als Reaktion auf das Feststellen, dass die zweite CA-Prozedur unter Verwendung der zweiten RA-Präambel durchgeführt wurde, einer Größe eines Contention Window.

12. Verfahren nach einem der Ansprüche 1-3, wobei das Erkennen des Fehlers das Empfangen (822) einer Fehlerangabe an einer MAC-Entität (132) von einer PHY-Entität (134) einschließt.

13. Benutzerausrüstung, UE (102), die eine Verarbeitungshardware (130) umfasst, die zum Ausführen eines Verfahrens nach einem der vorhergehenden Ansprüche konfiguriert ist.

## Revendications

1. Procédé dans un équipement utilisateur, UE (102), permettant de réaliser une procédure d'accès aléatoire dans un spectre sans licence, le procédé comprenant :
la sélection (810), par un matériel de traitement (130) et sur la base d'un premier signal de référence d'informations d'état de canal, CSI-RS, ou d'un premier bloc de signal de synchronisation, SSB, d'un premier préambule d'accès aléatoire, RA, et d'une première occasion pour transmettre le premier préambule RA à une station de base (104) ;
la réalisation (814), par le matériel de traitement (130), d'une première procédure d'accès de canal, CA, incluant la transmission du premier préambule RA pendant la première occasion, pour déterminer si un canal auquel la première occasion correspond est ou n'est pas inactif ;
en réponse à la détection d'une défaillance liée à la première procédure CA, la sélection (830) d'un second préambule RA différent du premier préambule RA et d'une seconde occasion pour transmettre le second préambule RA à la station de base (104), la seconde occasion étant différente de la première occasion, sur la base d'un second CSI-RS différent du premier CSI-RS ou d'un second SSB différent du premier SSB ; et
la réalisation (834), par le matériel de traitement (130), d'une seconde procédure CA incluant la transmission du second préambule RA pendant la seconde occasion, pour déterminer si un canal auquel la seconde occasion correspond est ou n'est pas inactif.

2. Procédé selon la revendication 1, comprenant en outre la réception du premier CSI-RS ou du premier SSB, et du second CSI-RS ou du second SSB, par le biais d'au moins un message de réseau provenant de la station de base (104).

3. Procédé selon la revendication 1 ou 2, comprenant en outre :
la réception, depuis la station de base (104), d'une configuration de contrôle de ressources radio, RRC, qui spécifie une pluralité de préambules RA et une pluralité d'occasions pour transmettre un préambule RA.

4. Procédé selon l'une quelconque des revendications 1 à 3, dans lequel :
la réalisation (814) de la première procédure CA inclut la détermination (816) si le canal est ou n'est pas inactif avant la première occasion, et
la détection de la défaillance inclut la détermination (820) que le canal n'est pas inactif pendant un laps de temps qui inclut la première occasion.

5. Procédé selon la revendication 4, comprenant en outre la transmission (838) du second préambule RA à la station de base (104) pendant la seconde occasion et en réponse à la détermination, pendant la seconde procédure CA, que le canal est inactif avant la seconde occasion.

6. Procédé selon la revendication 4, comprenant en outre :
la réception (822), depuis une entité (134) de couche physique, PHY, par une entité (132) de contrôle d'accès au support, MAC, d'une indication que le canal n'est pas inactif pendant le laps de temps qui inclut la première occasion.

7. Procédé selon l'une quelconque des revendications 1 à 3, dans lequel la détection de la défaillance inclut la détermination que le canal est actif.

8. Procédé selon l'une quelconque des revendications 1 à 3, dans lequel la réalisation (814, 834) de la première procédure CA et de la seconde procédure CA inclut la réalisation d'une procédure d'écoute avant émission, LBT.

9. Procédé selon l'une quelconque des revendications 1 à 3, comprenant en outre :
l'incrémentation, par le matériel de traitement (130), d'un compteur après la sélection du second préambule RA et de la seconde occasion pour transmettre le second préambule RA ;
la comparaison, par le matériel de traitement (130), du compteur à une valeur de seuil ; et
l'annulation, par le matériel de traitement (130), de la procédure d'accès aléatoire en réponse au dépassement par le compteur de la valeur de seuil.

10. Procédé selon l'une quelconque des revendications 1 à 3, comprenant en outre :
le démarrage, par le matériel de traitement (130), d'un minuteur lors du début de la première procédure de CA ; et
lorsque le minuteur expire avant que la première procédure CA ne s'achève, la réalisation d'au moins une parmi ; une reconfiguration d'au moins une d'une cellule primaire ou secondaire dans laquelle le canal est fourni ; ou une procédure d'établissement de connexion RRC.

11. Procédé selon l'une quelconque des revendications 1 à 3, comprenant en outre :
en réponse à la détermination que la seconde procédure CA a été réalisée en utilisant le second préambule RA, la réinitialisation d'une taille d'une fenêtre de contention.

12. Procédé selon l'une quelconque des revendications 1 à 3, dans lequel la détection de la défaillance inclut la réception (822) d'une indication de défaillance au niveau d'une entité MAC (132) depuis une entité PHY (134).

13. Équipement utilisateur, UE (102), comprenant un matériel de traitement (130) configuré pour exécuter un procédé selon l'une quelconque des revendications précédentes.
